# EUROPÄISCHE PATENTSCHRIFT

(11) **EP 1 741 883 B1**
(45) Veröffentlichungstag und Bekanntmachung des Hinweises auf die Patenterteilung: **22.04.2009**
(21) Anmeldenummer: 06114999.3
(22) Anmeldetag: 06.06.2006
(51) Int. Cl.: F01M 11/00, B60R 13/08, B65D 25/20

(54) **Ölwanne, insbesondere für eine Brennkraftmaschine**
Oil sump for an internal combustion engine
Carter d'huile pour un moteur à combustion interne

(30) Priorität: 09.06.2005 DE 202005009096 U
(43) Veröffentlichungstag der Anmeldung: 10.01.2007
(73) Patentinhaber: MANN+HUMMEL GmbH, 71638 Ludwigsburg (DE)
(72) Erfinder: Jessberger, Thomas, 71679, Asperg (DE)

(56) Entgegenhaltungen:
- EP-A- 0 661 420
- EP-A- 0 872 632
- DE-A1- 3 142 327
- DE-A1- 19 739 778
- US-A- 4 114 714
- US-A- 5 452 693

## Beschreibung

Die Erfindung bezieht sich auf eine Ölwanne, insbesondere für eine Brennkraftmaschine, nach dem Oberbegriff des Anspruches 1.

Aus dem Stand der Technik sind Ölwannen für Brennkraftmaschinen bekannt, an deren Außenwand Rippen angebracht sind, die die Ölwanne insbesondere bei starken mechanischen Einwirkungen, beispielsweise bei Steinschlag, schützen sollen. Eine derartige Ölwanne wird beispielsweise in der EP 1 041 253 B1 beschrieben. Auf der Außenseite des Wannenbodens der Ölwanne ist eine Mehrzahl beabstandeter Rippen angeordnet, von denen eine beschränkte Anzahl eine erhöhte Steifigkeit aufweisen, um hohe mechanische Kräfte besser aufnehmen zu können.

Die auf der Unterseite des Motors befindliche Ölwanne muss das Gewicht des Motors insbesondere im Falle der Montage in das Fahrzeug oder nach dem Ausbau im Servicefall, wenn der Motor auf dem Boden abgestellt wird, vollständig tragen. Die Gewichtskräfte des Motors werden über die Rippen auf der Außenseite des Wannenbodens abgestützt. Hierbei können Probleme auftreten, falls der Motor in schräger Position abgestellt wird oder der Boden abschüssig oder uneben ist, da einzelne Rippen zum Teil erheblich höher belastet werden als im Fall eines gleichmäßigen Aufsetzens auf den Untergrund. Es besteht dann die Gefahr, dass die Rippen brechen.

Auch im Falle eines Steinschlages, der auf die Ölwanne auftrifft, kann aufgrund des hohen übertragenen Impulses und der lokal begrenzten Krafteinleitung eine Beschädigung der Wanne trotz der schützenden Rippen nicht ausgeschlossen werden.

Aus der DE 197 39 778 C2 ist eine Ölwanne mit einer Schutzhülle bekannt, die mithilfe von Befestigungselementen auf Abstand zur Außenwand der Ölwanne gehalten ist. Im Zwischenraum zwischen Schutzhülle und Außenwand der Ölwanne ist ein vibrations- und schalldämpfendes Dämpfungselement in Form eines Elastomers eingebracht. Die Befestigungselemente ragen über die Außenseite der Schutzhülle heraus, so dass im Fall einer äußeren Einwirkung auf das Befestigungselement eine unmittelbare Kraftübertragung auf die Ölwanne gegeben ist, was zu einer Beschädigung der Ölwanne führen kann.

Aus der US 4,114,714 ist eine Ölwanne für ein Kraftfahrzeug bekannt, wobei die Ölwanne mit einer äußeren Schutzhülle versehen ist, die Bestandteil der Unterbodenabdeckung des Fahrzeuges ist.

Der Erfindung liegt das Problem zugrunde, mit einfachen konstruktiven Maßnahmen den Schutz einer Ölwanne vor Beschädigungen zu verbessern. Der verbesserte Schutz soll vorteilhaft ohne Gewichtserhöhung einhergehen.

Dieses Problem wird erfindungsgemäß mit den Merkmalen des Anspruches 1 gelöst. Die Unteransprüche geben zweckmäßige Weiterbildungen an.

Die erfindungsgemäße Ölwanne weist eine Schutzhülle auf, die die Außenwand der Ölwanne zumindest teilweise umschließt und auf Abstand zur Außenwand gehalten und gegenüber dieser in einer festen Position gehalten ist. Die Schutzhülle bildet ein von der Außenwand separat ausgeführtes Bauteil, welches aber mit der Außenwand verbunden sein kann und diese zusätzlich vor mechanischen Beschädigungen schützt. Aufgrund des Abstandes zwischen Schutzhülle und Außenwand der Ölwanne ist auch sichergestellt, dass beispielsweise die Schutzhülle durchdringende oder durchschlagende Gegenstände wie zum Beispiel Steine keinen unmittelbaren Impuls auf die Außenwand übertragen und diese beschädigen können. Vielmehr hält die Schutzhülle derartige Gegenstände ab, bevor diese auf die Außenwand einwirken können.

In den Zwischenraum zwischen der Schutzhülle und der Außenwand der Ölwanne ist ein Dämpfungselement eingebracht, welches Stöße und Schläge, die von außen auf die Schutzhülle wirken, dämpft. Dieses Dämpfungselement ist zweckmäßig als separates Bauteil ausgeführt und besteht beispielsweise aus einem Elastomer, das gegebenenfalls als Spritzgussbauteil an die Schutzhülle oder an die Außenwand der Ölwanne angespritzt ist. Darüber hinaus kommen aber auch alternative Verbindungsarten in Betracht, beispielsweise vulkanisieren oder ankleben.

Das Dämpfungselement, welches in den Zwischenraum zwischen Außenwand und Schutzhülle eingesetzt ist, wird von Abstandselementen durchragt. Es sind Abstandselemente vorgesehen, die die Schutzhülle nicht unmittelbar mit der Außenwand verbinden, sondern lediglich in das Dämpfungselement einragen. In diesem Fall wird die Schutzhülle über das Dämpfungselement an der Ölwanne gehalten. Gegebenenfalls kommen aber auch Mischformen in Betracht, bei denen einzelne Rippen in das Dämpfungselement einragen, ohne dieses zu durchdringen, und außerdem Verbindungselemente vorgesehen sind, die die Schutzhülle direkt mit der Außenwand der Ölwanne koppeln.

Die Schutzhülle ist vorteilhaft als eine geschlossene Wandung ohne Durchbrechungen ausgebildet, was den Vorteil hat, dass zusätzliche Sicherheit gegen Auslaufen von Öl im Falle einer Beschädigung der Ölwanne gegeben ist. Sollte die Außenwand der Ölwanne Leck schlagen, so wird das austretende Öl in der umschließenden Schutzhülle aufgenommen. Die Gefahr einer Umweltverschmutzung ist dadurch reduziert.

Abstandselemente, die die Schutzhülle einerseits mit der Ölwanne koppeln und andererseits die Schutzhülle auf Abstand zur Außenwand der Ölwanne halten, sind beispielsweise als Verbindungsrippen ausgeführt, die für den Fall, dass die Schutzhülle als Spritzgussbauteil ausgeführt ist, zweckmäßig als einteiliges Bauteil mit der Schutzhülle ausgebildet sind. Gegebenenfalls kommt auch eine einteilige Ausführung von Außenwand der Ölwanne, Abstandselemente und Schutzhülle in Betracht. Darüber hinaus ist es möglich, die Abstandselemente an die Außenwand anzuschweißen, beispielsweise im Wege des Vibrationsschweißens, über Ultraschallschweißen oder Laserschweißen, oder die Abstandselemente anzukleben oder mechanisch an der Außenwand zu befestigen, beispielsweise mithilfe von Schrauben, Krallen oder Clipse. Werden Schutzhülle und Verbindungselemente an die Außenwand angespritzt, so kann dies über Gasinjektionstechnik oder Wasserinjektionstechnik erfolgen.

Die Schutzhülle kann Bestandteil einer Unterbodenabdeckung sein, welche auf der Unterseite eines Kraftfahrzeuges als Schutzmaßnahme sowie zur Verbesserung des LuftwiderstandsBeiwertes angeordnet ist. Die Schutzhülle bildet einen Teil dieser Unterbodenabdeckung und ist im Bereich der Ölwanne mit der Außenwand der Ölwanne verbunden, und zwar entweder über das Dämpfungselement oder über die Abstandselemente, gegebenenfalls auch über beide Bauteile.

Weitere Vorteile und zweckmäßige Ausführungen sind den weiteren Ansprüchen, der Figurenbeschreibung und den Zeichnungen zu entnehmen. Es zeigen:
- Fig. 1: eine Ölwanne für die Brennkraftmaschine eines Kraftfahrzeuges in Seitenansicht, wobei die Außenwand der Ölwanne im Bereich des Wannenbodens und der in Fahrtrichtung vorne gelegenen Seitenwände von einer Schutzhülle umschlossen ist, die über eine Mehrzahl von Abstandselementen mit der Außenwand verbunden ist,
- Fig. 2: eine Fig. 1 entsprechende Darstellung, jedoch mit einer Schutzhülle, die Bestandteil einer Unterbodenabdeckung ist, mit einem Elastomer-Dämpfungselement im Zwischenraum zwischen Schutzhülle und Außenwand der Ölwanne,
- Fig. 3: ein weiteres Ausführungsbeispiel, bei dem die Schutzhülle über das Dämpfungselement mit der Außenwand der Ölwanne verbunden ist, wobei zur Stabilisierung Abstandselemente in das Dämpfungselement einragen, die jedoch das Dämpfungselement nicht durchdringen.

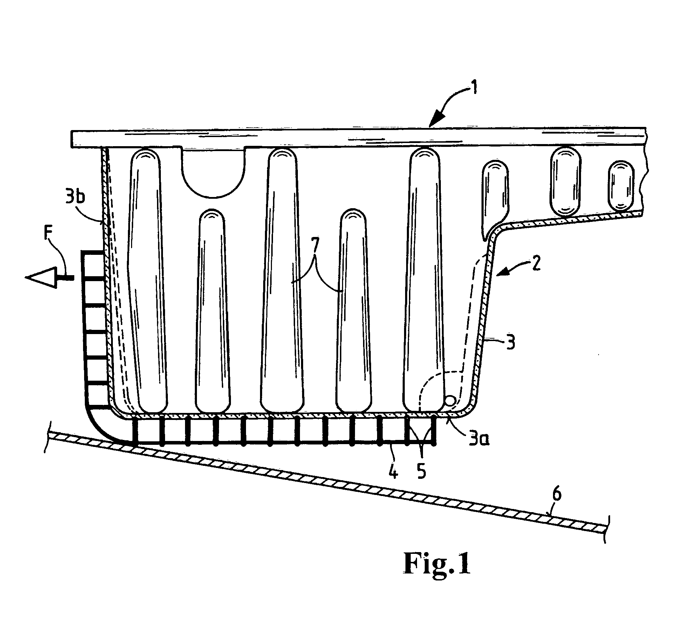

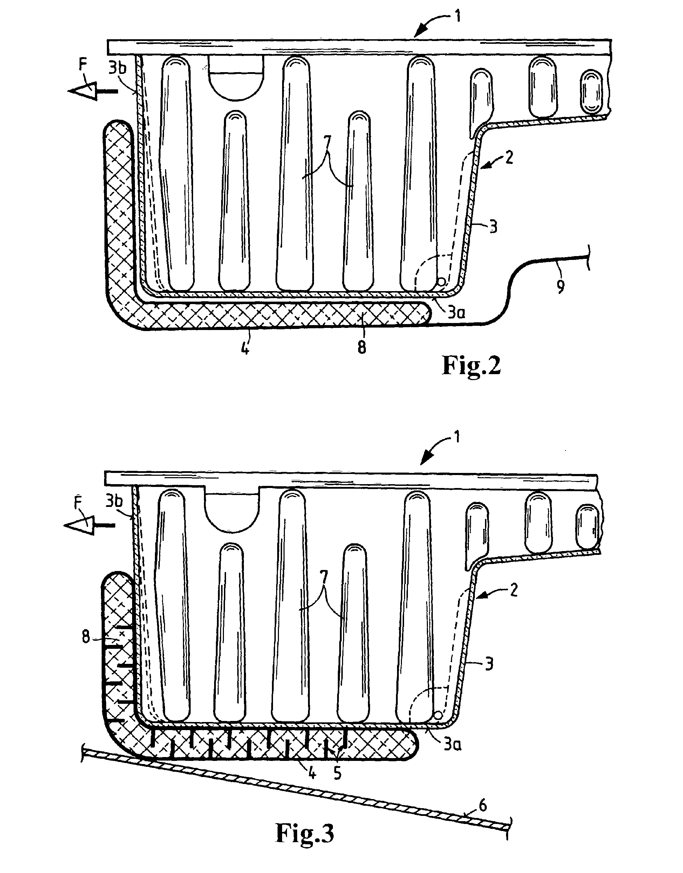

Die in den Fig. 1 und 2 gezeigten Ausführungsbeispiele sind nicht Teil der Erfindung, sondern erleichtern das Verständnis der Erfindung.

Die in Fig. 1 dargestellte Ölwanne 1 für eine Brennkraftmaschine eines Kraftfahrzeuges weist ein aus Kunststoff bestehendes Ölwandgehäuse 2 auf, das insbesondere im Spritzgussverfahren hergestellt wird. Die Außenwand 3 des Ölwannengehäuses 2 umfasst einen unten liegenden Wannenboden 3a und umlaufende Seitenwände 3b. Der Wannenboden 3a und die in Fahrzeug-Vorwärtsrichtung F vorne liegenden Seitenwände 3b sind von einer Schutzwand bzw. - hülle 4 umschlossen, die als separates Bauteil ausgeführt ist und über Abstandselemente 5 mit dem Wannenboden 3a bzw. der vorderen Seitenwand 3b verbunden ist. Die Abstandselemente 5 sorgen dafür, dass die Schutzhülle 4 auf Abstand zur Außenwand 3 des Ölwannengehäuses 2 liegt, so dass zwischen Außenwand 3 und Schutzhülle 4 ein Zwischenraum gebildet ist. Die Schutzhülle 4 besteht zweckmäßig ebenfalls aus Kunststoff, ebenso die Abstandselemente 5. Gemäß einer bevorzugten Ausführung ist vorgesehen, dass die Schutzhülle 4 einschließlich der Abstandselemente 5 an die Außenwand 3 der Ölwanne angespritzt sind. Die Schutzhülle 4 liegt konzentrisch zur Außenwand 3 der Ölwanne. Aufgrund des Abstandes zwischen der Schutzhülle 4 und der Außenwand 3 ist im Falle eines Steinschlages oder eines wie in Fig. 1 dargestellt ungleichmäßigen Aufsetzens der Ölwanne auf einen schiefen Boden sichergestellt, dass zunächst nur die äußere Schutzhülle 4 beschädigt wird, wohingegen die Außenwand 3 der Ölwanne unbeschädigt bleibt. Auf die Schutzhülle 4 einwirkende hohe Kräfte werden über die Vielzahl der als Verstrebungen oder Rippen ausgebildeten Abstandselemente 5 gleichmäßig auf die Außenwand bei der Ölwanne verteilt, so dass hohe, lokale Kraftspitzen, die auf die Schutzhülle 4 einwirken, nach Art einer Flächenlast gleichmäßig auf die gesamte Außenwand der Ölwanne verteilt werden, soweit diese von der Schutzhülle 4 umgriffen wird.

An der Außenwand 3 können zusätzliche Rippen 7 ausgebildet sein, welche die Außenwand verstärken und für zusätzliche Stabilität sorgen. Diese Rippen 7 sind sowohl im Bereich der Seitenwände 3b als auch zweckmäßig im Bereich des Wannenbodens 3a unmittelbar an der Außenwand 3 angeordnet.

Im Ausführungsbeispiel gemäß Fig. 2 bildet die Schutzhülle 4 einen Bestandteil einer Unterbodenabdeckung 9, die auf der Unterseite des Kraftfahrzeuges vorgesehen ist. In dem in Fahrtrichtung F vorne liegenden Bereich umgreift die Schutzhülle 4 die vordere Seitenwand 3b, außerdem wird der Unterboden 3a der Außenwand 3 der Ölwanne umgriffen. Die Schutzhülle 4 liegt auf Abstand zur Außenwand 3, wobei ein Dämpfungselement 8 in den Zwischenraum zwischen Außenwand 3 und Schutzhülle 4 eingebracht ist. Das Dämpfungselement 8 besteht insbesondere aus einem Elastomer und ist fest mit der Schutzhülle 4 verbunden. Die am Fahrzeug gehaltene Unterbodenabdeckung 9 einschließlich der den vorderen Bereich der Unterbodenabdeckung bildenden Schutzhülle 4 ist zweckmäßig nicht unmittelbar mit der Ölwanne 1 verbunden, sondern ist an einem weiteren Bauteil des Kraftfahrzeuges gehalten und wird aufgrund der Eigenstabilität in einer festen Relativposition zur Außenwand 3 der Ölwanne 1 gehalten. Auch das Dämpfungselement 8 besitzt zweckmäßig keine unmittelbare Verbindung zur Außenwand 3 der Ölwanne.

Gemäß einer alternativen Ausführung kann es aber auch vorteilhaft sein, das Dämpfungselement 8 an die Außenwand 3 anzubinden, beispielsweise anzukleben. Darüber hinaus oder alternativ kann es angezeigt sein, Verbindungselemente zur zusätzlichen Anbindung der Schutzhülle 4 an die Außenwand 3 der Ölwanne 1 vorzusehen.

Im Ausführungsbeispiel gemäß Fig. 3 ist die Schutzhülle 4 als eigenständiges, separates Bauteil ausgeführt, das unmittelbar mit der Außenwand 3 der Ölwanne 1 verbunden ist. Die Kopplung zwischen Schutzhülle 4 und Außenwand 3 erfolgt über das Elastomer-Dämpfungselement 8, das auf der der Ölwanne 1 zugewandten Seite der Schutzhülle 4 angeordnet ist. Zusätzlich können Abstandselemente 5 vorgesehen sein, die aber, wie im Ausführungsbeispiel nach Fig. 3 dargestellt, den Abstand zwischen Schutzhülle 4 und Außenwand 3 nicht vollständig überbrücken und damit auch das Dämpfungselement 8 nicht vollständig durchdringen, sondern nur in das Dämpfungselement einragen. Die Abstandselemente 5 sind abwechselnd auf der Schutzhülle 4 und dem Wannenboden 3a und der vorderen Seitenwand 3b der Außenwand angeordnet. Die Anbindung der Schutzhülle 4 an die Ölwanne 1 erfolgt in diesem Ausführungsbeispiel ausschließlich über das Dämpfungselement 8, das zweckmäßig an die Außenwand 3 der Ölwanne angeklebt ist. Die Abstandselemente 5, welche das Dämpfungselement 8 nicht vollständig durchdringen, haben die Aufgabe, nur im Falle einer starken äußeren Einwirkung auf die Schutzhülle 4 in Richtung auf die Ölwanne 1 und einem hierdurch erfolgten Zusammendrücken des Dämpfungselementes 8 zusätzliche Abstützkräfte aufzunehmen, sobald die Schutzhülle 4 so weit an die Außenwand angenähert ist, dass die Abstandselemente 5 am jeweils gegenüberliegenden Bauteil anliegen.

Gegebenenfalls können auch zusätzliche Abstandselemente vorgesehen sein, die die Schutzhülle 4 unmittelbar mit der Außenwand 3 der Ölwanne verbinden.

## Patentansprüche

1. Ölwanne, insbesondere für eine Brennkraftmaschine, mit einer auf der Außenwand der Ölwanne angeordneten Schutzkontureinrichtung, wobei die Schutzkontureinrichtung als eine die Außenwand (3) zumindest teilweise umschließende Schutzhülle (4) ausgebildet ist, die auf Abstand zur Außenwand (3) und gegenüber dieser in einer festen Position gehalten ist, und zwischen Außenwand (3) und Schutzhülle (4) ein Dämpfungselement (8) eingebracht ist, **dadurch gekennzeichnet, dass** Abstandselemente (5) zwischen der Schutzhülle (4) und der Außenwand (3) der Ölwanne (1) vorgesehen sind, wobei die Abstandselemente (5) in das Dämpfungselement (8) einragen, ohne den Abstand zwischen Schutzhülle (4) und Außenwand (3) der Ölwanne (1) vollständig zu überbrücken.

2. Ölwanne nach Anspruch 1, **dadurch gekennzeichnet, dass** die Schutzhülle (4) als eine geschlossene, durchgehende Wandung ausgebildet ist.

3. Ölwanne nach Anspruch 1 oder 2, **dadurch gekennzeichnet, dass** die Abstandselemente (5) zwischen Außenwand (3) und Schutzhülle (4) als Dämpfungselemente (8) ausgeführt sind.

4. Ölwanne nach einem der Ansprüche 1 bis 3, **dadurch gekennzeichnet, dass** das Dämpfungselement (8) als separates Bauteil ausgeführt ist, das in den Zwischenraum zwischen Außenwand (3) der Ölwanne (1) und Schutzhülle (4) eingesetzt ist.

5. Ölwanne nach Anspruch 4, **dadurch gekennzeichnet, dass** das Dämpfungselement (8) aus einem Elastomer gefertigt ist.

6. Ölwanne nach einem der Ansprüche 1 bis 5, **dadurch gekennzeichnet, dass** die Schutzhülle (4) als Kunststoff-Spritzgussbauteil ausgeführt ist.

7. Kraftfahrzeug mit Brennkraftmaschine und einer Ölwanne nach einem der Ansprüche 1 bis 6, **dadurch gekennzeichnet, dass** die Schutzhülle (4) Bestandteil einer Unterbodenabdeckung (9) ist.

## Claims

1. . Oil sump, in particular for an internal combustion engine, with a protective contour device arranged at the exterior wall of the oil sump, the protective contour device being designed as a protective cover (4) surrounding the exterior wall (3) at least partially, which is located at a certain distance to the exterior wall (3) and held in a fixed position opposite to it, and a damping element (8) being inserted between exterior wall (3) and protective cover (4), **characterized in that** spacer elements (5) are provided between the protective cover (4) and the exterior wall (3) of the oil sump (1), the spacer elements (5) protruding into the damping element (8) without bridging completely the distance between the protective cover (4) and the exterior wall (3) of the oil sump (1).

2. . Oil sump according to claim 1, **characterized in that** the protective cover (4) is designed as a closed end-to-end wall.

3. . Oil sump according to claim 1 or 2, **characterized in that** the spacer elements (5) between exterior wall (3) and protective cover (4) are designed as damping elements (8).

4. . Oil sump according to one of the claims 1 to 3, **characterized in that** the damping element (8) is designed as separate subassembly which is inserted into the intermediate space between exterior wall (3) of the oil sump (1) and protective cover (4).

5. . Oil sump according to claim 4, **characterized in that** the damping element (8) is made of an elastomer.

6. . Oil sump according to one of the claims 1 to 5, **characterized in that** the protective cover (4) is designed as plastic injection molded part.

7. . Motor vehicle with internal combustion engine and an oil sump according to one of the claims 1 to 6, **characterized in that** the protective cover (4) is part of an underbody shield (9).

## Revendications

1. Bac à huile, notamment pour un moteur à combustion interne, avec un dispositif à contour de protection disposé sur la paroi extérieure du bac à huile, le dispositif à contour de protection étant conçu comme une enveloppe protectrice (4) entourant, tout au moins partiellement, la paroi extérieure (3) et étant maintenu dans une position fixe à une certaine distance de la paroi extérieure (3) et en face de cette paroi, et un élément d'amortissement étant inséré entre la paroi extérieure (3) et l'enveloppe protectrice (4), **caractérisé en ce que** des éléments entretoises (5) sont prévus entre l'enveloppe protectrice (4) et la paroi extérieure (3) du bac à huile (1), les éléments entretoises (5) entrant dans l'élément d'amortissement (8) sans recouvrir totalement l'espace ménagé entre l'enveloppe protectrice (4) et la paroi extérieure (3) du bac à huile (1).

2. Bac à huile selon la revendication 1, **caractérisé en ce que** l'enveloppe protectrice (4) est conçue comme paroi fermée continue.

3. Bac à huile selon la revendication 1 ou 2, **caractérisé en ce que** les éléments entretoises (5) sont conçus comme éléments d'amortissement (8) entre la paroi extérieure (3) et l'enveloppe protectrice (4).

4. Bac à huile selon l'une des revendications 1 à 3, **caractérisé en ce que** l'élément d'amortissement (8) est conçu comme élément séparé inséré dans l'interstice ménagé entre la paroi extérieure (3) du bac à huile (1) et l'enveloppe protectrice (4).

5. Bac à huile selon la revendication 4, **caractérisé en ce que** l'élément d'amortissement (8) est fait d'un élastomère.

6. Bac à huile selon une des revendications 1 à 5, **caractérisé en ce que** l'enveloppe protectrice (4) est conçue comme pièce en plastique moulée par injection.

7. Véhicule automobile avec moteur à combustion interne et un bac à huile selon une des revendications 1 à 6, **caractérisé en ce que** l'enveloppe protectrice (4) fait partie d'un revêtement sous caisse (9).
